# EUROPEAN PATENT APPLICATION

(11) **EP 4 819 508 A1**
(43) Date of publication of application: **07.10.2026**
(21) Application number: 25168711.7
(22) Date of filing: 04.04.2025
(51) Int. Cl.: H04B 7/185

(54) **COMPUTER-IMPLEMENTED METHOD FOR OPERATING A DATA COMMUNICATION NETWORK COMPRISING A PLURALITY OF MOVING NETWORK NODES**

(71) Applicant: Aperio Space Technologies GmbH in Gründung (i.G.), 64807 Dieburg (DE)
(72) Inventor: Hoffmann, Thomas, 64807 Dieburg (DE); Wördehoff, Kai, 64807 Dieburg (DE)
(74) Representative: WSL Patentanwälte Partnerschaft mbB

(57) **Abstract**

The present invention relates to a computer-implemented method for operating a data communication network (hereinafter simply referred to as "network") in particular a satellite network, wherein the network comprises a plurality of moving network nodes, in particular satellites, and a plurality of at least temporary existing node-node data connections configured between two moving nodes of the network in each case.

## Description

The present invention relates to a computer-implemented method for operating a data communication network, in particular a satellite network, wherein the network comprises a plurality of moving network nodes, in particular satellites, and a plurality of at least temporary existing node-node data connections configured between two moving nodes of the network in each case.

Real-time access to data from modern satellite systems is integral to many industries, such as disaster response, logistics, collision avoidance and many more, yet satellite operators face significant challenges that limit their ability to establish connections to their satellites at any time. One of the primary issues is the difficulty and expensiveness to construct ground stations in enemy-owned territory or in extreme environments. Traditionally, satellite access has been heavily dependent on fixed ground stations, which must be strategically located to maintain the necessary line-of-sight with orbiting satellites. This reliance creates geographical limitations, effectively prohibiting connections to satellites as they fly above inaccessible areas.

Another critical problem is the restricted communication window available for satellite contacts. Satellites, particularly those in low Earth orbit (LEO), are only visible from a given ground location for brief periods as they rapidly move across the sky. This temporal constraint complicates efforts to establish continuous or on-demand communication links, posing substantial challenges for applications requiring persistent connectivity or rapid access.

The combination of spatial and temporal restrictions not only impedes the deployment of versatile global communication networks but also restricts the development of innovative applications in fields such as emergency response, remote sensing, and global broadband services. The need to operate within these limitations has sparked ongoing discussions in the space industry.

Against this background, it is the problem of the present invention, to provide a method or system enabling an operator to reach a specific satellite in space orbit on demand at (optimally) any time and from several different locations on Earth or in Earth's orbit.

This problem is solved by a computer-implemented method for operating a data communication network (hereinafter simply referred to as "network") comprising a plurality of moving network nodes, such as satellites, spacecrafts, airplanes or cars, and a plurality of at least temporary existing node-node data connections configured between two moving nodes of the network in each case.

In particular, the moving nodes of the network are satellites. In the following, whenever a moving node is described, it is understood that this moving node can be a satellite. If at least two satellites are part of the data communication network, this data communication network is called satellite network in the following. If two satellites moving relative to each other form a node-node data connection, this data connection is also called satellite-satellite data connection in the following.

If some aspects are described only with respect to a satellite network or to satellites as moving nodes, these aspects can also be applied to moving network nodes that are not satellites orbiting the Earth.

A moving node, in the sense of the present invention, can be any object that moves relative to other network nodes through the air or space or on the ground. Each moving node can perform specific functions such as observation, communication, navigation, measurements, espionage or research. This definition includes not only artificial satellites that orbit the Earth or other celestial bodies, but also other flying devices like weather balloons, airplanes and drones, that are used for similar purposes at lower altitudes, and even terrestrial objects such as cars, trains and ships. Such objects can be nodes of the network and can be equipped with instruments that collect and transmit data to each other and/or back to Earth or space, thereby contributing to weather forecasting, traffic control, earth observation, or scientific research. Further, the network may also comprise ground stations or cell towers as network nodes.

In the sense of the present invention, a node-node data connection is a data connection between two network nodes moving relative to each other.

According to an embodiment of the present invention, the method comprises the following step:
- determining future node-node data connections of the network for a contact plan of a network node using a computer-implemented network model, preferably a computer-implemented flow network model, most preferably a computer-implemented multi-commodity flow network model.

The method can comprise a further step of distributing information about the thus determined future node-node data connections to the nodes involved in the respective future node-node data connections.

A flow network is a directed graph in which each edge has a non-negative capacity and is used to transport a certain quantity, referred to as "flow," from a source node to a sink node. The flow through each edge must not exceed the given capacity, and at every node except the source and sink, the amount of incoming flow must equal the amount of outgoing flow - this is known as the flow conservation property. In a multi-commodity flow network, this concept is extended to include multiple different types of flow, called commodities, each with its own source and sink nodes. All commodities share the same network infrastructure and compete for the same edge capacities. Therefore, the sum of the flows of all commodities on any given edge must not exceed that edge's capacity. To model and solve such networks computationally, several methods are available. A common approach is linear programming (LP), where each commodity's flow is represented by variables, and constraints enforce flow conservation and respect capacity limits. Solvers like CPLEX, Gurobi, or open-source alternatives such as GLPK and CBC are used for this purpose.

The flow network (directed graph) may consist of multiple layers, in which each layer represents a point in time and contains information about which (moving) nodes could potentially connect to which other (moving) nodes at that point in time. The respective next layer is created for every time at which a new potential node-node data connection arises, or an existing node-node data connection ceases to exist (discrete approach). For efficiency reasons, not the entire network state may be saved/considered for each time step, but instead only change matrices are saved wherever possible.

The solution of the flow problem is used to derive the contact plan for each individual node (satellite). Instead of multiple discrete layers, the model may also use a continuous approach

When determining node-node data connections using a flow network model, additional explicit model constraints might be used representing one or more of the following physical constraints: power budget of a node in a node-node data connection, number of terminals of a node participating in a node-node data connection, receiving bandwidth capacity, sending bandwidth capacity, storage capacity, memory capacity, throughput bandwidth capacity of a node in a real-time forwarding scenario, CPU capacity.

Furthermore, the model may use the following constraints implicitly or explicitly, in particular implicitly: compatibility between communication terminals of two nodes of a potential data-data connections, distance between two nodes of a potential data-data connections.

According to an embodiment of the present invention, the method comprises the following step: determining future node-node data connections of the network for a contact plan of a network node using an online optimization method. This increases the robustness of the whole network.

According to an embodiment of the present invention, the method is configured to enable an existing satellite in orbit to be used as a moving network node, wherein the method enables the existing satellite, which has a primary satellite mission in addition to being part of the satellite network, to perform its primary mission and to participate in communication procedures of the network simultaneously or alternately. Preferably, the method enables the existing satellite, which has a primary satellite mission in addition to being part of the satellite network, to perform its primary mission and to participate in communication procedures of the network simultaneously.

According to an embodiment of the present invention, the method enables multiple satellites to be part of the satellite network, wherein these multiple satellites differ from each other at least with respect to one of the following features: orbit height, orbital period, orbit eccentricity, orbit inclination, operator of the respective satellite, main mission of the respective satellite like e.g. weather monitoring or communication. The more satellites that participate in the satellite network, the more robust the satellite network. These multiple satellites may differ from each other at least with respect to two or three of the following features: orbit height, orbital period, orbit eccentricity, orbit inclination, operator of the respective satellite, main mission of the respective satellite like e.g. weather monitoring or communication.

According to an embodiment of the present invention, the method enables at least three different satellites in orbit to be used as moving network nodes simultaneously, wherein these three different satellites differ from each other with respect to at least one orbital parameter, preferably with respect to at least two orbital parameter, such as orbit height, orbital period, orbit eccentricity, orbit inclination, and/or their spacecraft operating system (SCOS).

According to an embodiment of the present invention, the method enables the existing satellite to switch between a primary mode, in which the existing satellite participates at least in satellite communication procedures of the primary mission, and a network mode, in which the satellite participates at least in satellite communication procedures of the satellite network.

Consequently, various existing satellites can participate in the satellite network. The method may provide a communication protocol for the existing satellites participating in the satellite network defining the communication rules, for example with respect for the usage of the primary mode and the network mode of each participating satellite. This protocol may allow an individualization of the communication rules depending on the primary mission of the respective satellite and the primary mission's overall priority

According to an embodiment of the present invention, the method ensures that the satellite exclusively participates in satellite communication procedures of the primary mission, when the satellite is in the primary mode, and that the satellite exclusively participates in satellite communication procedures of the satellite network, when the satellite is in the network mode. This strict protocol ensures maximum reliability of an existing satellite's primary mission.

According to an embodiment of the present invention, the method comprises the following steps:
i) Determining a first time information comprising information about time intervals in which the primary mission requires the existing satellite to be operated in the primary mode based on goals of the primary mission;
ii) Determining a second time information comprising time intervals, in which the existing satellite can be operated in the network mode based on the first time information determined in step i);
iii) Operating the existing satellite in the primary mode or in the network mode based on the first time information and/or based on the second time information.

It turned out that this detailed but still simple protocol steps ensure a high robustness of the satellite network, especially if the amount of satellites participating in the satellite networks exceeds a pre-defined critical number such as 250 satellites in orbit in case of a satellite network

According to an embodiment of the present invention, the method comprises a step of determining the distance and relative velocity of the moving nodes, in particular satellites, involved in the at least temporary existing node-node data connection, in particular satellite-satellite data connection. In case of a satellite network: The position can be determined via the satellite-satellite data connection, for example depending on the data transmission time between both satellites, and the relative velocity can be determined via the satellite-satellite data connection, for example depending on the doppler shift of the signal frequency. The position and relative velocity information can be used to determine orbital information of the satellites participating in the respective satellite-satellite connection. The network's robustness is further enhanced by regular updates of the satellite's orbital information throughout the network.

According to an embodiment of the present invention, a satellite of a satellite network is placed in a transfer mode when the satellite acts as part of a data route of a data packet transfer within the satellite network and receives the data packet from a network node and forwards it to another network node, wherein a satellite of the satellite network is placed in a network care mode when the satellite is not in transfer mode, wherein the satellite in network care mode contacts at least one accessible further satellite of the satellite network without having a transfer order for this satellite, and exchanges network information with this satellite. The transfer mode and the network care modes may be independent of the primary mode and network mode. Hence, a satellite can be in the transfer mode and in the primary mode simultaneously, it can be in the network care mode and the primary mode simultaneously, it can be in the transfer mode and the network mode simultaneously and it can be in the network care mode and the network mode simultaneously.

According to an embodiment of the present invention, the method comprises the following steps:
A) Providing a dynamic network topology, in particular a dynamic mesh network topology, so that the node-node data connections vary in time with respect to the participating moving nodes;
B) Providing an at least partially decentralized topology management of the network, so that the creation of a contact plan of a moving node of the network is decentralized.

It turned out that a decentralized topology management has many advantages for the operation of the network. Especially for a satellite network, if existing satellites, which do not necessarily be of the same type and do not necessarily have the same operating system, are part of the network, it is easier to set up and maintain the network, if the topology is managed decentralized by involving several nodes of the network or even each node of the network for determining the contact plans of the network's satellites.

In the context of a satellite network, "topology" refers to the configuration of network nodes (such as satellites and ground stations) and how they are interconnected through communication links. This configuration may take the form of a contact plan for each network node. Further, the topology can include the spatial distribution of satellites in orbit, the network's architecture (e.g., mesh, star, etc.), and the routing paths for data transmission between nodes. It has been shown that the topology significantly impacts the network's performance, robustness, and communication latency.

In the sense of the present invention, a "contact plan" of a moving node, in particular a satellite, is a computer-implemented plan defining the future node-node data connections (in particular satellite-satellite data connections) of the respective moving nodes. For a satellite network: Each satellite of the satellite network may possess its own contact plan. The contact plan may contain one or more of the following parameters:
- A time at which the satellite shall establish a connection, i.e. a link, to another satellite,
- A Duration of the connection between the satellites,
- Identification information to determine which other satellite to connect to,
- Orbital parameters of the other satellite,
- Link specifications such as connection type e.g. optical or radio frequency, modulation schemes, encoding schemes,
- If existing, traffic specifications and/or forecasts,
- Expected quality of the connection such as bandwidth, latency to ground, number of hops to ground, redundancy,
- Priority of the connection,
- Priority of the other satellite.

If the contact plan is managed decentralized, decisions about adding new entries to multiple contact plans, deleting entries from multiple contact plans or changing entries of multiple contact plans are not made not by a single network node, like a single satellite, a single ground station or a single computer unit on Earth.

As an example, for decentralized managed contact plans, each satellite of the satellite network decides on its own about changes of its contact plan. As a further example, the network comprises multiple master satellites deciding about the contact plans of multiple network satellites, which define a network subgroup. As a further example, each contact plan is a product of negotiations between the owner-Satellite of this contact plan and its current or future neighboring network nodes.

According to an embodiment of the present invention, each network node of a plurality of network nodes, particularly each node of the network, utilize their own node-based topology method to determine its own contact plan independently. These topology methods may be executed on the plurality of nodes or all nodes and are configured according to a uniform logic scheme, although a satellite may only take into account a subset of all satellites in the network for the generation of the contact plan due to constraints in the on-board resources available. This method is easy to apply to the individual satellites and provides a sufficient robustness of the network. Although it may happen that the network's satellites do not determine the same contact plan every time, the similarity of the individual determined contact plans is high enough to maintain the network's function and robustness.

According to an embodiment of the present invention, each node of a plurality of moving network nodes, particularly each node of all moving network nodes, utilize a negotiation method involving agreements between the respective node and multiple other nodes in the network, to determine its own contact plan based on feedback information of the multiple other nodes. The negotiation method utilizes the existing network connections to transmit the negotiation messages between two satellites that negotiate a new satellite-satellite data connection. Every satellite may negotiate with the intent to be best integrated into the network, i.e. every satellite may be greedy in its negotiations. Every satellite may have a priority parameter comprised of a static, mission- or operator-specific priority parameter as well as a dynamic, network state- or mission-phase-dependent priority parameter. Thus, the priority parameter may be different at different times depending on the state of the primary mission at that time as well as the satellite's already negotiated connections for that time and the quality of those connections. In a negotiation between two satellites about whether a satellite-satellite data connection shall be established during a present or future close approach between the two satellites, the priority of each satellite may be used to determine whether the satellite-satellite data connection is established. The adherence to the priorities of the involved satellites during a negotiation counteracts the greedy negotiation nature of the individual satellites and results in an overall stable and fair topology. This requires a more detailed communication protocol but provides maximum robustness of the decentralized managed network topology.

According to an embodiment of the present invention, each moving node of a first group of multiple moving network nodes utilizes a negotiation method involving agreements between the respective moving node and multiple other moving nodes of the first group, to determine its own contact plan based on feedback information of the multiple other moving nodes of the first group, wherein at least a first moving node of the first group determines a contact plan for each member of a second group of multiple moving network nodes, wherein preferably at least one moving node of the network does not belong to the first group and the second group at the same time. This method is a hybrid method of a negotiation method and an independent node-based method. With respect to a satellite network, this means that some satellites negotiate with each other to find a good contact plan for each negotiating satellite and other satellites receive their contact plan from a negotiating satellite without negotiating.

With respect to a satellite network, according to an embodiment of the present invention, the method includes an optimization procedure optimizing the creation of the contact plan in dependence on measures of one or more of the following aspects: the connection time between the nodes of the satellite network, the connection quality between the nodes of the satellite network, the costs of operating the satellite network, the amount of data that can be exchanged by a satellite node of the satellite network and a ground station node of the satellite network, the number of satellites that can be reached from the ground in real time.

Alternatively to a decentralized topology, an alternative embodiment of the present invention comprises a step of providing an centralized topology management of the satellite network, so that the creation of a contact plan of a satellite of the network is centralized and an updated contact plan is distributed to each node of the satellite network repeatedly. The centrally generated contact plans can be created by a single node of the satellite network, like e.g. a ground station, a master satellite or a computer unit on Earth, and can be distributed throughout the network afterwards.

A centralized topology, or a hybrid topology consisting of centralized and decentralized methods, may include the following steps:
- A single network node determines future node-node data connectiona consecutively.
- The information of a such a single node-node data connection or information about multiple of these node-node data connections are send to the relevant nodes (satellites).
- These relevant node store the information about the respective node-node data connections as part of their contact plan.

Each node can have its own contact plan, which is empty by default but can be filled by a central node or, in a hybrid mode, by a specific node responsible for that node.

The central node may determine the transmission time of a message that transmits information about node-node data connections to a particular node, such information being part of the contact plan of that particular node. The method may comprise the step of sending the message to the specific node, the sending time being dependent on the determined transmission time.

The method may also comprise the step of forwarding information about node-node data connections from the central node using store and forward techniques to ensure that this information can reach a specific node, in particular a satellite, even though there is no existing direct or indirect node-node data connection between the central node and the specific node to be reached.

According to an embodiment of the present invention, the method enables multiple moving nodes, in particular satellites, of the network, in particular the satellite network, to share their computational resources autonomously, i.e. in case of a satellite network without receiving an order from Earth forcing them to share their resources, in order to react to a request given to the satellite network. Such a request can come from a satellite's primary mission or from its functionality as a network node in the proposed satellite network. In the latter case, requests can include but are not limited to: computation of close approaches between satellites of the network including their time, duration and distance, computation of contact plans as described in claim 6, computation of optimal data routes in the current or planned topology of the satellite network. This increases the efficiency of the satellite network, especially in comparison to mono-type satellite networks., i.e. satellite networks that do not comprise satellites of different types and operators.

According to an embodiment of the present invention, the method comprises a step of transferring a standard request for a desired data transfer between two moving nodes of the network, in particular between two satellites of a satellite network, wherein the standard request comprises at the least the following information: desired start time of the data transfer and desired bandwidth of the data transfer. In particular, the standard request can also comprise an information about the priority of the data transfer request.

According to an embodiment of the present invention, the satellite network comprises a first satellite and a second satellite, wherein the method comprises the following further steps:
X) Initiating the transmission of a first message from the first satellite to the second satellite including a yes/no request to utilize a data connection with the second satellite;
Y) Receiving the first message by the second satellite and initiating a decision of the yes/no request by the second satellite, preferably depending on the contact plan of the second satellite;
Z) Initiating the transmission of a message from the second satellite to the first satellite, including the decision of the request from step X.

It turned out that this protocol steps can provide a stable negotiation scheme.

According to an embodiment of the present invention, the network is a satellite network and comprises a first satellite and a second satellite at least temporarily directly or indirectly connected to the first satellite via a single satellite-satellite data connection (direct) or multiple satellite-satellite data connections (indirect), wherein the method comprises the following further steps when there is a data connection between the first satellite and the second satellite:
C) Initiating the transmission of a first message from the first satellite to the second satellite including a yes/no request to utilize at least one computing resource of the second satellite and/or a further satellite;
D) Receiving the first message by the second satellite and initiating a decision of the yes/no request by the second satellite depending on the at least one computer resource and/or at least one orbital information, in particular an orbital information of the second satellite and/or a further satellite;
E) Initiating the transmission of a message from the second satellite to the first satellite, including the decision of the request from step C.

This decision-making communication can also take place without having a real-time connection between the two negotiating satellites, but by having the request and response messages be sent using store-and-forward methods. This decision-making structure - as part of the communication protocol - enables easy and fast negotiations between the satellites of the satellite network.

According to an embodiment of the present invention, during the existence of a direct or an indirect node-node data connection, in particular satellite-satellite data connection within a satellite network, preferably during each existence of such a data connection, the two moving nodes participating in this data connection exchange at least one piece of network information, in particular the network information relating to the contact plan of a participating moving node, especially of a participating satellite. This ensures a good knowledge base throughout the satellite network, which is especially advantageous if each node determines its contact plan individually based on the same underlying algorithm.

According to an embodiment of the present invention, the method is configured such that a first moving node, in particular a first satellite, of the network transmits a request for a new or future node-node data connection to a further moving node of the network, in particular a new satellite-satellite data connection to a further satellite of the network, to the network or independently schedules a new node-node data connection to a further moving node of the network when calculations on the first moving node or within the network come to one or more of the following results:
- that the first moving node will lose its existing or planned node-node data connection to another moving node in the network within a predefined time horizon, for example, within the future 30 minutes;
- that the existing node-node data connection will have insufficient bandwidth to positively fulfil a request from the network within a predefined time horizon;
- that the number of possible routes from the first moving node to a specific network node, for example to a specific additional satellite of the satellite network or to a specific ground station, falls below a predefined target value, for example 2;
- that the number of hops between the first moving node and a specific network node, for example to a specific other satellite in the satellite network or to a specific ground station, exceeds a predefined target value, for example 10;
- that the latency between the first moving node and a specific network node, for example to a specific other satellite in the satellite network or to a specific ground station, exceeds a predefined target value, for example 100 milliseconds.

The decision to plan a new satellite-satellite data connection between a first satellite of the satellite network and a further satellite of the satellite network can also be made by a central computer unit when calculations on this central computer unit come to one or more of the above results. In such an embodiment of the present invention, the central computer unit might create and distribute the contact plans for the respective satellites according to the centralized approach.

According to an embodiment of the present invention a moving node of the network, which in this context is referred to as a godchild node, is assigned another node - a godchild node - as a godfather node, preferably in a fixed manner, so that the godfather node stores network information relating to the godchild node, e.g. the contact plan of the godchild node, in its database prioritized, whereby preferably the godfather node can collect more network information about the godchild node than the other nodes of the network, if necessary with the exception of the godchild node itself, wherein preferably every moving node in the network is both a godfather node and a godchild node.

According to an embodiment of the present invention, a satellite of the satellite network, which in this context is referred to as a godchild satellite, is assigned another satellite as a godfather satellite, preferably in a fixed manner, so that the godfather satellite stores network information relating to the godchild satellite, e.g. the contact plan of the godchild satellite, in its database prioritized, whereby preferably the godfather satellite can collect more network information about the godchild satellite than the other satellites of the satellite network, if necessary with the exception of the godchild satellite itself, wherein preferably every satellite in the satellite network is both a godfather satellite and a godchild satellite. This hierarchy structure further enhances the robustness of the network's topology.

The godfather satellite may also make sure that the godchild satellite is healthy and properly integrated into the satellite network and take countermeasures if it detects problems. For example, the godfather satellite may try to contact the godchild satellite in regular intervals via the satellite network.

According to an embodiment of the present invention, the method comprises the following steps,
F) providing at least a two-level differentiation of network information such that a first set of network information having a first priority and a second set of network information having a second priority lower than the first priority;
G) replicating the network information of the first group each time a direct or indirect node-node data connection configured between two moving nodes is existent.

The method may also comprise the following step:
H) replicating the network information of the second group during the existence of direct or indirect node-node data connection solely in response to a request, in particular a routing request, to one of the moving nodes involved in the direct or indirect node-node data connection.

According to an embodiment of the present invention referring to a satellite network, the method comprises the following corresponding steps,
F*) providing at least a two-level differentiation of network information such that a first set of network information having a first priority and a second set of network information having a second priority lower than the first priority;
G*) replicating the network information of the first group each time a direct or indirect satellite-satellite data connection is existent.

The method may also comprises the following step:
H*) replicating the network information of the second group during the existence of direct or indirect satellite-satellite data connection solely in response to a request, in particular a routing request, to one of the satellites involved in the direct or indirect satellite-satellite data connection.

Such a priority structures enhances the efficiency of the satellite network, since important information are broadcasted with a higher rate than less important information.

According to an embodiment of the present invention, the method includes a step of creating a collision avoidance plan for avoiding collisions between moving nodes that is designed based on direct or indirect node-node connections configured between moving nodes. According to an embodiment of the present invention, the network is a satellite network and the method includes a step of creating a satellite collision avoidance plan based on direct or indirect satellite-satellite data connections of the satellite network. The satellite network structure is perfect for avoiding collisions of the network's satellites with other network-satellite's or objects outside the network. For example, each time a satellite-satellite data connection exists, the participating satellites can exchange their knowledge about possible collision risks and determine how their own orbit is affected. Additionally, if two satellites of the satellite network are on a collision course, they can negotiate and plan an avoidance maneuver with each other using a direct or indirect satellite-satellite data connection of the satellite network without the need for terrestrial or human supervision or action and without the need for a data connection to the ground.

The underlying problem of the invention is also solved by a computer program product installable to a control device of a node of the network, wherein the computer program comprises instructions which, when executed by the control device, cause the control device to carry out the method of one of the aforementioned claims.

The underlying problem of the invention is also solved by a satellite control device, wherein the satellite control device is configured and arranged to perform a method according to any one of the aforementioned claims as part of a satellite operating in space.

The present invention also relates to a method for implementing or updating a computer-implemented method according to one of the aforementioned method-embodiments or the aforementioned computer program product on a satellite control device of a satellite located on earth or in space, in particular for implementing or updating a computer-implemented method according to one of the aforementioned method-embodiments or the aforementioned computer program product on a satellite control device of an existing satellite located in a space orbit.

The present invention also relates to data carrier with a computer-implemented method according to one of the aforementioned method-embodiments.

The present invention also relates to a satellite network comprising a plurality of satellites as respective network nodes, wherein the satellite network has a dynamic network topology, wherein the satellite network is configured such that the dynamic network topology is managed in a decentralized manner for at least one task area of the network topology.

The dynamic network topology may be a dynamic mesh topology. Further, the satellite network can comprise a distributed database comprising network information such that at a fixed point in time the most up-to-date network information is exclusively distributed across multiple network nodes.

Further features, advantages and examples of the invention can be found in the figures. These show:
- Figure 1:: a schematic view of an exemplary satellite network according to the present invention;
- Figure 2:: an illustration of a first example for a topology management method comprising a centralized management approach;
- Figure 3:: an illustration of a second example for a topology management method comprising a decentralized and independent management approach;
- Figure 4:: an illustration of a second example for a topology management method comprising a decentralized and negotiation-based management approach.

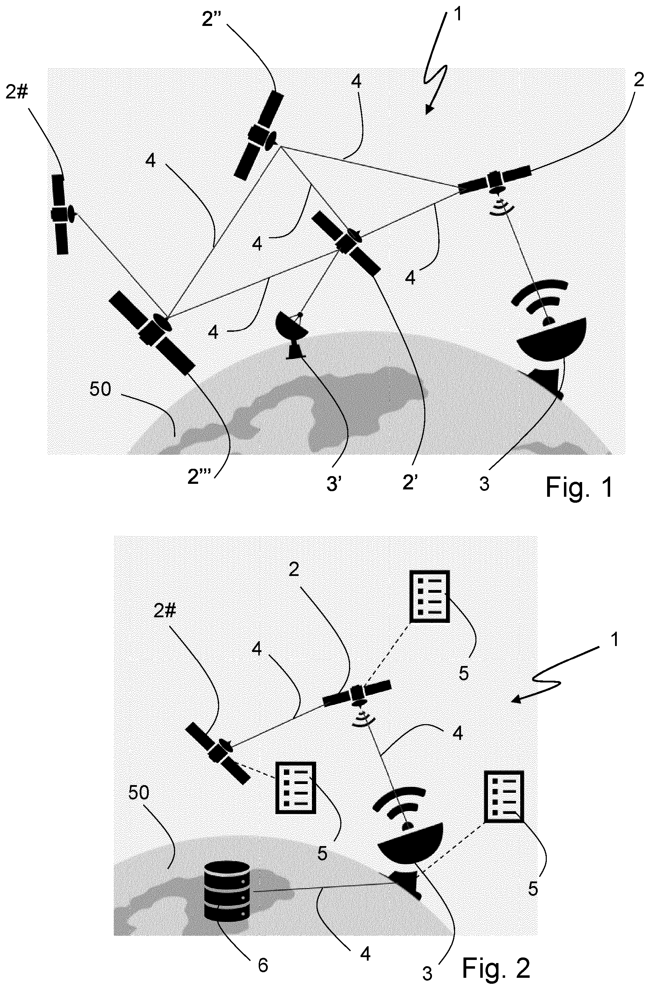

Figure 1 schematically shows an example of a satellite network 1 in which a plurality of satellites 2, 2', 2", 2‴ and 2# are integrated as network nodes. In addition, two ground stations 3 and 3' also form network nodes. The satellite network 1 significantly increases connectivity between the participating satellites 2, 2', 2", 2‴ and 2# and participating ground stations 3 and 3'.

In the example shown, satellite 2# cannot be reached directly via ground station 3. There may only be a small time window during the day or even during the week or month in which satellite 2# is in the direct field of view of ground station 3. However, thanks to the satellite network 1, a signal or message transmitted by ground station 3 can reach satellite 2# at any time. In the example shown, the signal either takes an initial route via satellite 2 to satellite 2', from there to satellite 2‴ and on to satellite 2#. Alternatively, routes are also conceivable that include satellite 2". For this purpose, satellite-satellite data connections 4 are temporarily generated between each two satellites whose communication ranges overlap.

The topology of the satellite network 1 can be managed in different ways. Three different examples are shown in Figures 2, 3 and 4.

Figure 2 shows a method - according to the present invention - in which the topology is determined centrally by a computer unit 6. In the example shown here, this computer unit 6 is located on Earth 50 and determines contact plans for the satellites participating in the network, of which satellites 2 and 2# are shown here. The customized contact plans 5 reach ground station 3 via the Earth Internet, from where they are distributed to satellite 2 and then throughout the entire satellite network 1, including satellite 2#. The customized contact plans 5 for each network satellite are then stored in the memory or cache of the satellite control units, so that the satellite-satellite data connections 4 of the network are established and disconnected according to these contact plans 5. To ensure that the centralized generation of contact plans 5 leads to meaningful results, the network's satellites 2 and 2# send status and orbit data via the satellite network 1 to the ground station 3 and from there back to the computer unit 6.

Based on this data, the contact plans 5 are then continuously optimized, updated and distributed throughout the network 1. The advantage of this centralized method is the high level of precision and predictability. The disadvantage of this method is the strong dependence of the network stability on the central processing unit and the large communication effort required to distribute the contact plans in the network.

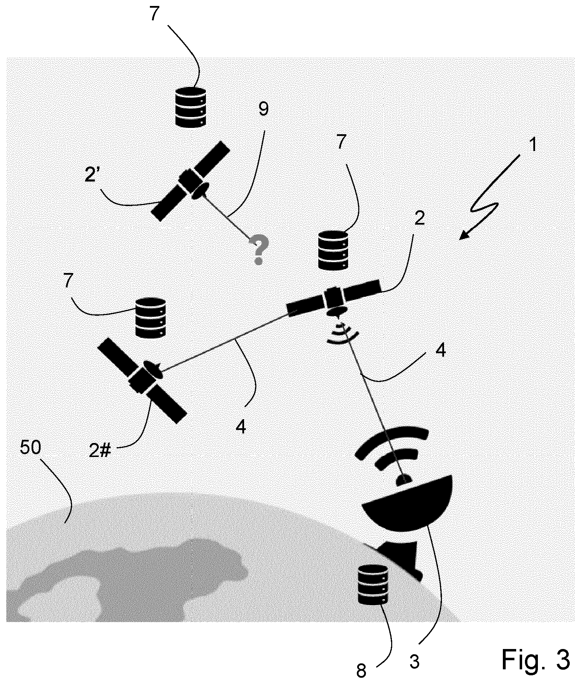

Figure 3 shows a method - according to the present invention - in which the topology is determined decentrally. In this case, each node of the satellite network 1 or at least several satellites 2, 2', 2# of the satellite network 1 comprise their own computer units 7, on which the same optimization algorithm runs based on the individual knowledge of the respective network node. As a result, each network node - here: satellites 2, 2' and 2# as well as ground station 3, which is also equipped with a computer unit 8 - creates a contact plan 5 for itself, independent of the contact plan calculations of the other nodes. For this reason, the shown method is also called decentrally independent topology management method. This method is very robust and highly efficient since much less communication is necessary for distributing the contact plans 5 throughout the satellite network 1. In fact, if each network node determines its own contact plan 5, no communication is required to distribute contact plans 5. On the other hand, there might be contact plans 5 which do not fit together due to different knowledge bases of each node leading to broken satellite-satellite-connections 9. However, if there are a sufficient number of satellites participating in the network, these broken satellite-satellite data connections 9 will not lead to a significant decrease of network robustness.

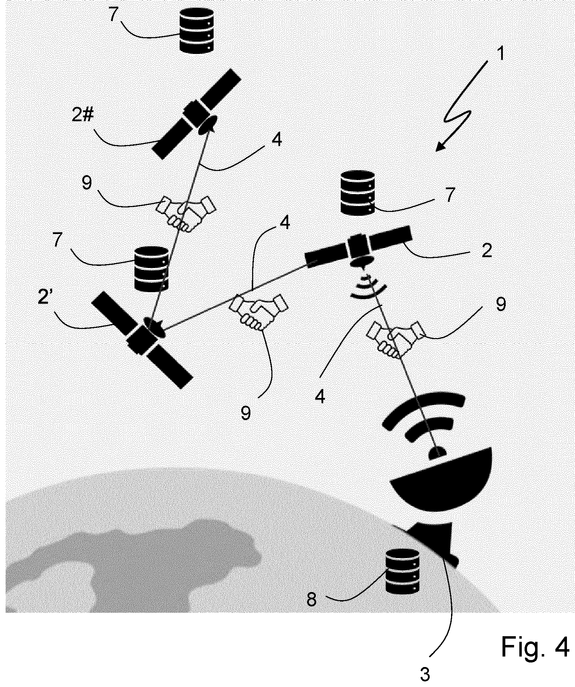

Another alternative of a decentrally managed topology is shown in Figure 4. Figure 4 shows a method - according to the present invention - in which the topology is determined decentrally and negotiation based. Each node, especially each satellite 2, 2', 2#, of the network negotiates with current or future neighboring nodes, especially neighboring satellites (e.g. those in reach of their respective field of view of the satellite), in order to determine its contact plan. Still, each of those network nodes requires its own computer unit 7 for determining its contact plan. The negotiation may include steps of sending a first draft of a contact plan 5 to neighboring nodes and a second step of receiving feedback information for this draft contact plan from the neighboring nodes. The negotiation may also include an individual handshake for each potential direct satellite-satellite data connection as described in claim 7.

Regardless of how the contact plans 5 are created, they may provide for the main mission of a participating existing satellite to be considered in the contact plan creation.

### Reference signs

- 1: Satellite network
- 2: Satellite
- 2': Satellite
- 2": Satellite
- 2‴: Satellite
- 2#: Satellite
- 3: Ground station
- 3': Ground station
- 4: At least temporary existing satellite-satellite data connection
- 5: contact plan
- 6: Computer unit on Earth
- 7: Computer unit on satellite
- 8: Computer unit at ground station
- 9: Broken satellite-satellite data connection
- 50: Earth

## Claims

1. Computer-implemented method for operating a data communication network comprising a plurality of moving network nodes, such as satellites, spacecrafts, airplanes or cars, and a plurality of at least temporary existing node-node data connections configured between two moving nodes of the network in each case.

2. Computer-implemented method according to claim 1,
wherein the method is configured to enable an existing satellite in orbit to be used as a moving network node,
wherein the method enables the existing satellite, which has a primary satellite mission in addition to being part of the satellite network, to perform its primary mission and to participate in communication procedures of the network simultaneously or alternately, preferably simultaneously.

3. Computer-implemented method according to claim 2,
wherein the method enables the existing satellite to switch between a primary mode, in which the existing satellite participates at least in satellite communication procedures of the primary mission, and a network mode, in which the satellite participates at least in satellite communication procedures of the satellite network.

4. Computer-implemented method according to claim 3,
wherein the method comprises the following steps:
i) Determining a first time information comprising information about time intervals in which the primary mission requires the existing satellite to be operated in the primary mode based on goals of the primary mission;
ii) Determining a second time information comprising time intervals, in which the existing satellite can be operated in the network mode based on the first time information determined in step i);
iii) Operating the existing satellite in the primary mode or in the network mode based on the first time information and/or based on the second time information.

5. Computer-implemented method according to one of the aforementioned claims,
wherein the method comprises the following steps:
A) Providing a dynamic network topology, in particular a dynamic mesh network topology, so that the node-node data connections vary in time with respect to the participating moving nodes;
B) Providing an at least partially decentralized topology management of the network, so that the creation of a contact plan of a moving node of the network is decentralized.

6. Computer-implemented method according to one of the aforementioned claims, wherein each network node of a plurality of network nodes, in particular each node of the network, utilize their own node-based topology method to determine its own contact plan independently,
wherein preferably these topology methods executed on the plurality of nodes or all nodes are configured according to a uniform logic scheme.

7. Computer-implemented method according to one of the aforementioned claims, wherein each node of a plurality of moving network nodes, in particular each node of all moving network nodes, utilize a negotiation method involving agreements between the respective node and multiple other nodes in the network, to determine its own contact plan based on feedback information of the multiple other nodes.

8. Computer-implemented method according to one of the aforementioned claims, wherein the method is configured such that a first moving node, in particular a first satellite, of the network transmits a request for a new node-node data connection to a further moving node of the network, in particular a new satellite-satellite data connection to a further satellite of the network, to the network or independently schedules a new node-node data connection to a further moving node of the network when calculations on the first moving node or within the network come to one or more of the following results:
- that the first moving node will lose its existing node-node data connection to another moving node in the network within a predefined time horizon, for example, within the future 30 minutes;
- that the existing node-node data connection will have insufficient bandwidth to positively fulfil a request from the network within a predefined time horizon;
- that the number of possible routes from the first moving node to a specific network node, for example to a specific additional satellite of the satellite network or to a specific ground station, falls below a predefined target value;
- that the number of hops between the first moving node and a specific network node, for example to a specific other satellite in the satellite network or to a specific ground station, exceeds a predefined target value;
- that the latency between the first moving node and a specific network node, for example to a specific other satellite in the satellite network or to a specific ground station, exceeds a predefined target value.

9. Computer-implemented method according to one of the aforementioned claims, wherein a moving node of the network, which in this context is referred to as a godchild node, is assigned another node - a godchild node - as a godfather node, preferably in a fixed manner, so that the godfather node stores network information relating to the godchild node, e.g. the contact plan of the godchild node, in its database prioritized,
whereby preferably the godfather node can collect more network information about the godchild node than the other nodes of the network, if necessary with the exception of the godchild node itself,
wherein preferably every moving node in the network is both a godfather node and a godchild node.

10. Computer-implemented method according to one of the aforementioned claims, wherein the method comprises the following steps,
F) providing at least a two-level differentiation of network information such that a first set of network information having a first priority and a second set of network information having a second priority lower than the first priority;
G) replicating the network information of the first group each time a direct or indirect node-node data connection configured between two moving nodes is existent,
wherein preferably the method also comprises the step of:
H) replicating the network information of the second group during the existence of direct or indirect node-node data connection solely in response to a request, in particular a routing request, to one of the moving nodes involved in the direct or indirect node-node data connection.

11. Computer-implemented method according to one of the aforementioned claims, wherein a collision avoidance plan for avoiding collisions between moving nodes is designed based on direct or indirect node-node connections configured between moving nodes.

12. Computer-implemented method according to one of the aforementioned claims,
wherein the method comprises the following step:
- determining future node-node data connections of the network for a contact plan of a network node using a computer-implemented network model, preferably a computer-implemented flow network model, most preferably a computer-implemented multi-commodity flow network model.

13. Satellite control device,
wherein the satellite control device is configured and arranged to perform a method according to any one of the aforementioned claims as part of a satellite operating in space.

14. Method for implementing or updating a computer-implemented method according to one of the claims 1 to 12 on a satellite control device of a satellite located on earth or in space, in particular for implementing or updating a computer-implemented method according to one of the claims 1 to 12 on a satellite control device of an existing satellite located in a space orbit.

15. Satellite network comprising a plurality of satellites as respective network nodes,
wherein the satellite network has a dynamic network topology,
wherein the satellite network is configured such that the dynamic network topology is managed in a decentralized manner for at least one task area of the network topology.
